# EUROPÄISCHE PATENTSCHRIFT

(11) **EP 1 594 090 B1**
(45) Veröffentlichungstag und Bekanntmachung des Hinweises auf die Patenterteilung: **26.03.2008**
(21) Anmeldenummer: 04010497.8
(22) Anmeldetag: 03.05.2004
(51) Int. Cl.: G06T 11/20

(54) **Graphische Benutzeroberfläche zum Darstellen von mehrfach hierarchisch gegliederten Mengen**
Graphical user interface for displaying multi-hierarchically structured sets
Interface utilisateur graphique pour visualiser des ensembles structurés en multiples hiérarchies

(43) Veröffentlichungstag der Anmeldung: 09.11.2005
(73) Patentinhaber: SIEMENS AKTIENGESELLSCHAFT, 80333 München (DE)
(72) Erfinder: Opaterny, Thilo, 90453 Nürnberg (DE)

(56) Entgegenhaltungen:
- US-A1- 2002 030 703
- US-A1- 2004 036 698

## Beschreibung

Die Erfindung betrifft ein System und ein Verfahren zur grafischen Darstellung mehrerer Teilmengen aus einer Gesamtmenge von Objekten.

Objekte, welche Elemente von Mengen sind, haben in der Regel Beziehungen zueinander. Um die Beziehungen der Objekte zueinander zu strukturieren, werden in der Regel Hierarchien verwendet. Ein typisches Beispiel hierfür sind Dateisysteme in Computern. Jede Datei hat einen Namen, welcher jedoch nur innerhalb des Verzeichnisses, in dem die Datei gespeichert ist, eindeutig ist. Innerhalb eines Systems von mehreren Dateien, welche in mehreren Verzeichnissen gespeichert sind, kann ein Name einer Datei mehrfach vergeben werden. Die Menge der vorhandenen Dateien wird hierbei durch die Verzeichnisse strukturiert, welche in einer bestimmten Hierarchie zueinander angeordnet sind. Hierbei kann ein Verzeichnis mehrere Dateien enthalten.

Ebenso kann die Verwaltung von Objekten als Elemente von Mengen strukturiert sein. Hierbei hat ebenfalls jedes Objekt einen Namen. Ein Objekt kann hierbei eine Datei sein oder auch ein in einer höheren Hierarchieebene angeordnetes Verzeichnis. Hierbei kann jedes Objekt bzw. jede Datei eines Systems durch die Angabe eines Pfades adressiert werden. In der Regel werden derartige Hierarchien grafisch mit Hilfe eines Baumes dargestellt. Es hat sich herausgestellt, dass hierdurch einem Benutzer die Auswahl einer Datei aus der entsprechenden Menge von Dateien erleichtert wird.

Eine derartige Baumdarstellung kann für alle hierarchischen Systeme verwendet werden. Beispielsweise für Stücklisten, welche im Rahmen eines Herstellungsprozesses Verwendung finden. Stücklisten sind hierbei Hierarchien. Beispielsweise besteht ein Auto aus vielen Teilen, und bei der Montage werden kleine Teile zu größeren Teilen zusammengefügt. Beispielsweise ergeben eine Menge von Zahnrädern und Achsen ein Getriebe. Die bereits zusammengefügten Teile werden mit anderen größeren Teilen zu noch größeren Einheiten zusammengefügt. Beispielsweise ergeben ein Getriebe, eine Kupplung und ein Zylinderblock einen Motor. Eine Stückliste eines Autos kann wie erläutert als Baum dargestellt werden. Hierbei würden die kleinen Teile also Zahnräder und Achsen als Blätter des Baumes dargestellt werden. Diese Blätter des Baumes sind in der Regel Teile, die vom Hersteller zugekauft werden.

Für einen Kaufmann im Einkauf des Unternehmens ist nun eine übergeordnete Hierarchie-Ebene, beispielsweise das Getriebe, nicht von Interesse. Ein Kaufmann interessiert sich nur für die Blätter des Baumes also die Teile, die zugekauft werden müssen. Hierbei ist für den Kaufmann jedoch nicht interessant, welche dieser zugekauften Teile zu einer übergeordneten Einheit, also quasi einem größeren Teil zusammengefügt werden müssen, sondern es ist für den Kaufmann vielmehr interessant, diese Blätter des Baumes, beispielsweise nach Lieferanten zu strukturieren. Hat der Hersteller beispielsweise einen Zulieferer für Zahnräder, welche jedoch nicht nur innerhalb eines Getriebes verwendet werden, sondern auch an anderen Stellen des Autos eingebaut sind, so interessieren den Kaufmann alle Blätter des Baumes, die Zahnräder repräsentieren. Er möchte die Blätter des Baumes, also die Objekte, dementsprechend nach Lieferanten strukturieren.

Eine weitere, anders strukturierte Hierarchie, ist beispielsweise in der Fertigung von Interesse. Hierbei werden Teile, also Objekte nach Bauplätzen, an denen die Teile zusammengefügt werden, strukturiert. Eine derartige Struktur unterscheidet sich von den beiden bisher genannten, da es sowohl sein kann, dass an einem Platz mehrere Montageschritte ausgeführt werden, als auch, dass die Montage über mehrere Bauplätze verteilt ist.

Die aufgeführten Beispiele zeigen, dass es insbesondere im Verlauf eines Fertigungsprozesses eine Menge von Teilen gibt, die im Rahmen einer softwaretechnischen Automatisierungslösung in Form von Objekten repräsentiert werden und die in mehreren unterschiedlichen aber voneinander abhängigen Hierarchien angeordnet sind. Eine oben bereits erwähnte Baumstruktur kann jedoch immer nur eine Hierarchie darstellen. Für jede der im Beispiel genannten Anwendungen muss somit ein eigener Baum erstellt werden und es ist nicht erkennbar, an welcher Stelle ein Objekt in dem entsprechenden anderen Baum angeordnet bzw. positioniert ist. Der Betrachter eines Baumes und somit einer Hierarchiestruktur erhält also keine Information darüber, in welchem Umfeld und mit welchen Beziehungen ein Objekt in der anderen Hierarchiestruktur vorkommt.

Aus US 2002/0030703 ist ein System und eine Methode bekannt, welche die Darstellung von Objekten in verschiedenen Hierarchien, so genannten Polyarchien, beschreibt. Hierbei kann durch den Benutzer ein Objekt in einer Hierarchie ausgewählt werden und nach Aktivierung in seiner Position in einer anderen Hierarchie dargestellt werden. Dabei wird ein Wechseln zwischen den Hierarchien durch visuelles Morphen erzielt.

Die Aufgabe der vorliegenden Erfindung ist daher, ein System anzugeben, mit Hilfe dessen Objekte, welche sich in mehreren Hierarchien befinden, auf einfache Weise dargestellt werden können, so dass bequem zwischen den verschiedenen Hierarchien navigiert werden kann.

Die Aufgabe wird gelöst durch ein System zur grafischen Darstellung mehrerer Teilmengen aus einer Gesamtmenge von Objekten, bei dem die Objekte einer Teilmenge zur Darstellung in ihrer jeweiligen hierarchischen Beziehung zueinander vorgesehen sind, wobei mindestens ein Objekt in mindestens zwei Teilmengen vorkommt und als Übergangsstelle zwischen den Darstellungen der Teilmengen ausgebildet ist und wobei eine Kennzeichnung der Zugehörigkeiten der die Übergangsstellen bildenden Objekte zu den Teilmengen vorgesehen ist, wobei innerhalb oder im Umfeld der kennzeichnung visualisiert wird, ob in den jeweiligen Teilmengen hinter dem dargestellten Objekt verborgene Hierarchie - Ebenen vorhanden sind.

Des Weiteren wird die Aufgabe gelöst durch ein Verfahren zur grafischen Darstellung mehrerer Teilmengen aus einer Gesamtmenge von Objekten, bei dem die Objekte einer Teilmenge in ihrer jeweiligen hierarchischen Beziehung zueinander dargestellt werden, wobei mindesten ein Objekt in mindestens zwei Teilmengen vorkommt und eine Übergangsstelle zwischen den Darstellungen der Teilmenge bildet und wobei die Zugehörigkeiten der die Übergangsstellen bildenden Objekte zu den Teilmengen gekennzeichnet werden, wobei innerhalb oder im Umfeld der kennzeichnung visualisiert wird, ob in den jeweiligen Teilmengen hinter dem dargestellten Objekt verborgene Hierarchie - Ebenen vorhanden sind..

Der Erfindung liegt die Erkenntnis zugrunde, dass Dinge bzw. Objekte aus verschiedensten Lebensbereichen in der Regel unterschiedliche Beziehungen zueinander aufweisen und dass diese Beziehungen (größere Zusammengehörigkeit einer Menge von Objekten im Verhältnis zu einer zweiten Menge von Objekten) in Form von hierarchischen Strukturen darstellbar sind. Hierbei sind die einzelnen Objekte, die in diesen Mengen enthalten sind, in Abhängigkeit von einer Betrachtungsweise unter Umständen anders zueinander gruppiert. Das heißt, die hierarchisch strukturierten Objekte kommen in Abhängigkeit von der Betrachtungsweise in unterschiedlichen Hierarchien vor. Hierbei ist in einer ersten hierarchischen Struktur die Beziehung der Objekte anders als in einer zweiten hierarchischen Struktur.

Bei den hierarchisch zu ordnenden Objekten kann es sich um Teile, welche beispielsweise für die Herstellung eines Automobils benötigt werden, handeln, wie es eingangs im Beispiel beschrieben ist. Hierbei werden die Teile in Form von Stücklisten hierarchisch organisiert. Es kann sich bei den Objekten jedoch auch um Dateien oder Softwarebausteine handeln, wie sie im Rahmen eines Engineering-Systems beim Erstellen einer Automatisierungslösung für eine Fertigungs- und/oder Prozessautomatisierung benötigt werden.

Die Teile der Stückliste, die genannten Dateien oder auch die erwähnten Softwarebausteine werden hierbei in unterschiedlichen Hierarchien mit zueinander unterschiedlichen Beziehungen strukturiert, um verschiedene Ansichten auf die Gesamtmenge der Teile bzw. Dateien bzw. Softwarebausteine je nach Bedarf zu ermöglichen.

Hierbei kommen eine Menge von Teilen bzw. Dateien oder Softwarebausteinen in mehreren hierarchischen Strukturen vor. Um die Beziehung eines derartigen Objekts (Teil einer Stückliste, Datei, Softwarebaustein) in der jeweiligen Hierarchie zu den anderen beteiligten Objekten betrachten zu können, muss ein Benutzer in der jeweiligen Hierarchie navigieren und kann die hierarchische Struktur erkennen. Das heißt, innerhalb einer Hierarchie kann ein Benutzer die zu einer Untereinheit zusammengehörigen Objekte als solche erkennen. In einer weiteren Hierarchie kommen die entsprechenden Objekte jedoch unter Umständen an einer völlig anderen Position vor. Ein Benutzer müsste also in einer zweiten Hierarchie wieder so lange herumnavigieren, bis er das entsprechende Objekt seiner Wahl, über welches Information benötigt wird, gefunden hat. Eine Verbindung zwischen den Hierarchien, die es einem Benutzer ermöglicht, direkt auf ein entsprechendes Objekt zuzugreifen, existiert derzeit nicht.

Es ist somit vorteilhaft für einen Benutzer, wenn er ausgehend von einer hierarchischen Struktur, in der er sich gerade befindet, über ein dort von ihm betrachtetes Objekt direkt Information über die Lage und die Beziehung zu benachbarten Objekten in einer anderen Hierarchie bekommen kann. Aus diesem Grund wird dem Benutzer mit Hilfe der vorliegenden Erfindung ermöglicht, aus einer Hierarchie, also beispielsweise einer Baumstruktur heraus über ein selektiertes Objekt direkt in eine zweite Hierarchie zu wechseln und dort die Beziehung des Objektes und seiner Umgebung sich ebenfalls darstellen zu lassen. Vorteilhaft ist hierbei insbesondere, dass der Benutzer nicht in der weiteren Hierarchie unter Zeitaufwand nach dem Objekt und seiner dortigen Lage suchen muss. Auf diese Weise kann ein Benutzer eines derartigen Systems auf einfache Weise unterschiedliche Hierarchiestrukturen sichten.

Gemeinsame Objekte sind hierbei als Übergangsstellen zwischen den unterschiedlichen Hierarchien ausgebildet. Das heißt, wenn ein Anwender ein derartiges gemeinsam vorkommendes Objekt selektiert hat und betrachtet, so wird mit Hilfe einer Kennzeichnung vor dem entsprechenden Objekt visualisiert, dass dieses Objekt auch in entsprechenden anderen Hierarchien enthalten ist und dort betrachtet werden kann. In jeder der verschiedenen Hierarchiestrukturen wird also durch die entsprechende Kennzeichnung genau angezeigt, welche Objekte in welchen anderen Hierarchien vorkommen, und Objekte, die in mehreren Hierarchien enthalten sind, sind entsprechend als Übergangsstellen zum Wechsel zwischen den Hierarchien ausgebildet.

Eine weitere vorteilhafte Ausbildung der Erfindung ist dadurch gekennzeichnet, dass die Darstellung der jeweiligen hierarchischen Beziehung der Objekte zueinander in Form einer Baumstruktur vorgesehen ist. Durch diese Form der hierarchischen Darstellung der Strukturen wird dem Benutzer des entsprechenden Systems eine geläufige und in der Regel auch bekannte Darstellungsform angeboten. Mit Hilfe von Bäumen, welche gerichtete, zusammenhängende zyklenfreie Grafen repräsentieren, kann jede beliebige Hierarchie zwischen beteiligten Objekten dargestellt werden. Hierbei weist der Baum eine Wurzel und anschließend eine beliebige Menge von Verzweigungen bis hin zu den Blättern auf. Die einzelnen Objekte, im Beispiel der Stückliste für die Autoherstellung also die einzelnen einzubauenden bzw. zuzuliefernden Teile sind hierbei die Blätter des Baumes. Diese Teile bzw. Objekte werden dann in unterschiedlichen Ebenen zu immer komplexeren Einheiten zusammengefasst .

Hierbei ist die Zusammenfassung der Teile unterschiedlich, je nachdem ob mehrere Teile zu einem Größeren zusammengefasst werden sollen, mehrere Teile eventuell von einem Lieferanten bestellt werden sollen, oder mehrere Teile an einem bestimmten Bauplatz zur Verfügung stehen müssen. Die Verwendung der Baumstruktur ist hierbei insbesondere vorteilhaft, da die Zusammengehörigkeit untergeordneter Mengen von einem Benutzer des Systems intuitiv sofort erkannt werden kann.

Eine weitere vorteilhafte Ausbildung des Systems ist dadurch gekennzeichnet, dass spezifische Zeichen zur Kennzeichnung der Zugehörigkeit der Objekte für jede Teilmenge vorgesehen sind. Durch diese spezifischen Kennzeichnung der Zuordnung kann vom Benutzer des Systems sofort erkannt werden, in welchen anderen Hierarchiestrukturen, falls mehr als zwei vorhanden sind, das entsprechende Objekt enthalten ist. Hierdurch wird auf einfache Weise visualisiert, in welchem Kontext das entsprechende Objekt überhaupt nur relevant ist und in welchem Kontext es überhaupt in Beziehung zu anderen Objekten zu betrachten ist.

Eine weitere vorteilhafte Ausbildung des Systems ist dadurch gekennzeichnet, dass das Wechseln zwischen den Darstellungen der Teilmengen durch ein Aktivieren eines als Übergangsstelle ausgebildeten Objekts durch einen Benutzer des Systems vorgesehen ist. Das einfache Wechseln zwischen den Hierarchie-Darstellungen wird auf diese Weise möglich. Erkennt ein Benutzer beispielsweise, dass ein Objekt in mehreren hierarchischen Strukturen abgebildet ist, weil die entsprechenden spezifischen Zeichen an dem Objekt angebracht sind, so kann er zwischen den Hierarchie-Ebenen einfach dadurch wechseln, dass er beispielsweise das Objekt selektiert und/oder auf das entsprechende Zeichen, welches vor dem Objekt angebracht ist, klickt. Hierdurch wird durch die aktive Auswahl des Benutzers ein Wechsel der Darstellung erzeugt, und der Benutzer sieht anschließend die hierarchische Darstellung die er durch sein Aktivieren ausgewählt hat. Das heißt, der Benutzer kann die Beziehungen eines Objektes zu benachbarten Objekten direkt in verschiedenen hierarchischen Strukturen betrachten, ohne jeweils über einen Einstieg über die Wurzel in der jeweils anderen Hierarchie-Ebene sich bis zu entsprechenden Objekt durchhangeln zu müssen.

Eine weitere vorteilhafte Ausbildung der Erfindung ist dadurch gekennzeichnet, dass ein Wechseln zwischen den Darstellungen der Teilmengen derart erfolgt, dass ein bereits selektiertes Objekt selektiert bleibt. Wird ein Wechsel durch ein Aktivieren eines als Übergangsstelle ausgebildeten Objekts erzeugt, so wird nicht nur das Objekt in seinem Umfeld in der neuen hierarchischen Struktur angezeigt, sondern das Objekt bleibt vielmehr als solches für den Benutzer auch selektiert. Zur weiteren Bearbeitung des entsprechenden Objektes, muss das Objekt durch den Benutzer somit nicht noch einmal aktiviert oder selektiert werden. In der neuen Hierarchiestruktur steht das Objekt dem Benutzer direkt zur Verfügung.

Eine weitere vorteilhafte Ausbildung des Systems ist dadurch gekennzeichnet, dass das Wechseln zwischen den Darstellungen der Teilmengen über eine Auswahl eines einer anderen Teilmenge darstellenden Baumes durch einen Benutzers mittels einer Reiterleiste vorgesehen ist. Vorteilhaft ist hierbei, dass der Benutzer nicht nur über die als Übergangsstellen ausgebildeten Objekte wechseln kann, sondern dass er primär auch direkt in eine vollständige andere Hierarchie einsteigen kann. Hierbei wird dem Benutzer ein Wechsel dadurch ermöglicht, dass er über eine Reiterleiste direkt den anderen Baum, in den beispielsweise die Objekte angeordnet sind, auswählt. Vorteilhaft ist hierbei, dass den Benutzer eine Wechselmöglichkeit zur Verfügung gestellt wird, die von der Usability her für ihn bekannt ist. Außerdem wird dem Benutzer durch die entsprechende Reiterleiste gleichzeitig visualisiert, wie viele Hierarchie-Strukturen bzw. Teilmengen im System überhaupt vorhanden sind. Die Zahl der Hierarchie-Strukturen wäre aus einem Baum heraus nicht unbedingt direkt ersichtlich, da ja nicht alle Objekte in allen Hierarchien vorhanden sein müssen, und der Benutzer sich deswegen auf komplizierte Weise über die entsprechenden Zeichen vor den Übergangsstellen einen Überblick über die Anzahl der vorhandenen Hierarchie-Strukturen bzw. Teilmengen schaffen müsste. Durch die Reiterleiste wird dieser Überblick dagegen sofort gegeben.

Eine weitere vorteilhafte Ausbildung der Erfindung ist dadurch gekennzeichnet, dass ein Wechseln zwischen den Darstellungen der Hierarchie-Strukturen bzw. Teilmengen derart erfolgt, dass ein bereits selektiertes Objekt selektiert bleibt, wenn es in der neuen Teilmenge enthalten ist, oder dass die nächste auf dem Pfad zur Wurzel liegende Übergangsstelle der neuen Teilmenge selektiert wird, wenn das ursprünglich selektierte Objekt nicht in der neuen Teilmenge vorhanden ist. Bei einem Wechsel zwischen den Hierarchien über die Reiterleiste wird somit, wenn ein Objekt in beiden Hierarchien bzw. Teilmengen vorhanden ist, die entsprechende Selektion des Objektes beibehalten. Wie bei einem Wechsel über das Aktivieren der entsprechenden Zeichen vor den Übergangsstellen ist es auch in diesem Fall gewährleistet, dass ein bereits selektiertes Objekt zur weiteren Bearbeitung für den Benutzer zur Verfügung steht.

Wenn jedoch das entsprechende Objekt in der neuen Hierarchie, die der Benutzer über die Reiterleiste ausgewählt hat, nicht vorhanden ist, so wird im System automatisch auf die nächste auf dem Pfad zur Wurzel liegende Übergangsstelle des Baumes gesprungen, und diese wird automatisch zum selektierten Element. Für einen Benutzer ist somit sofort erkennbar, dass das Objekt in der entsprechenden Hierarchie nicht vorhanden ist und durch den Sprung auf die nächste Übergangsstelle ist die weitere Navigation für den Benutzer erleichtert, da ein definierter, dem ursprünglichen Objekt möglichst naher Ausgangspunkt für das weitere Arbeiten vorhanden ist. Alternativ kann bei einem Wechsel zwischen den Teilmengen, wenn das ursprünglich selektierte Objekt in der neuen Teilmenge nicht enthalten ist, auch auf die Wurzel der neuen Teilmenge gesprungen werden.

Im Folgenden wird die Erfindung anhand der in den Figuren dargestellten Ausführungsbeispiele näher beschrieben und erläutert.

Es zeigen:
- FIG 1: eine schematische Darstellung des Systems für die Darstellung verschieden strukturierter Hierarchien,
- FIG 2: ein Anwendungsbeispiel aus dem Umfeld der Automatisierungstechnik.

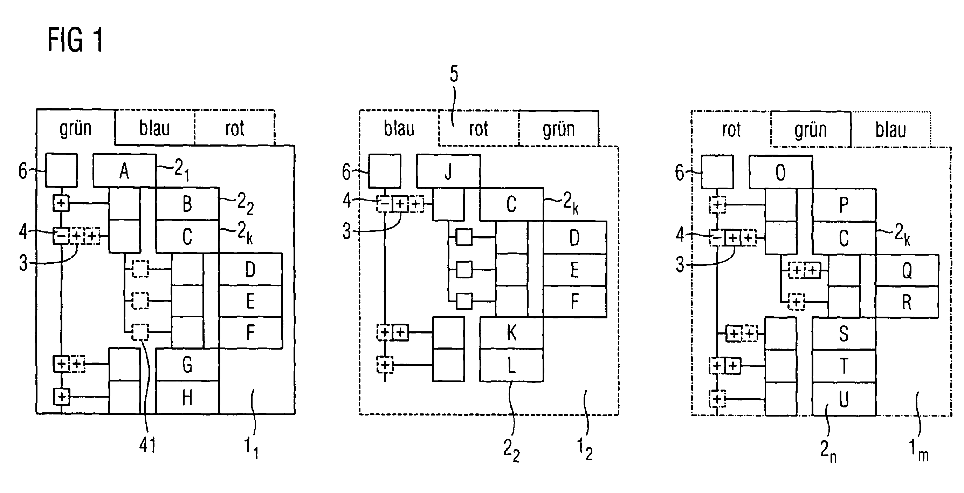

FIG 1 zeigt ein System zur Darstellung der Beziehung zwischen einer Menge von Objekten 2_{a..u} und deren Beziehungen untereinander in unterschiedlichen Teilmengen 1_{1..m}. Hierbei ist eine erste Struktur der Elemente bzw. Objekte 2_{a..t} in der Teilmenge 1₁ abgebildet. Die Objekte 2_{a..t} sind ihrer Zusammengehörigkeit entsprechend in unterschiedlichen Hierarchien strukturiert. Hierbei wird die Struktur der Objekte 2_{a..t} beispielsweise mit Hilfe einer Baumstruktur visualisiert (2ₜ ist in Teilmenge 1₁ nicht abgebildet, da die Darstellung unten abgeschnitten ist).

In einer zweiten Teilmenge 1₂ sind weitere Objekte 2_{j..1} dargestellt. Die Beziehungen der Objekte 2_{j..1} ist ebenfalls wieder durch eine hierarchische Baumstruktur visualisiert. Hierbei kommen einige Objekte 2_{c}, 2_{d}, 2ₑ, 2_{f} sowohl in der Teilmenge 1₁ als auch in der Teilmenge 1₂ vor. Andere Objekte, beispielsweise das Objekt 2₁ kommt nur in der Teilmenge 1₂ vor.

In einer dritten Teilmenge 1ₘ wird die strukturelle Beziehung einer weiteren Menge von Objekten mittels eines Baumes dargestellt. In der Teilmenge 1ₘ kommen sowohl Objekte aus Teilmenge 1₁ als auch aus Teilmenge 1₂ vor, in Teilmenge 1ₘ gibt es jedoch auch Objekt, die in keiner der anderen Teilmenge vorkommen.

Objekte, die in mindestens zwei Teilmengen vorkommen, sind als Übergangsstellen 3 zwischen den Teilmengen 1_{1..m} implementiert. Hierbei werden die Übergangsstellen 3 mittels Zeichen 4 visualisiert, wobei ein Zeichen vor einem Objekt 2_{a..u} angibt, in welchen weiteren Teilmengen 1_{1..m} außer der aktiven Teilmenge das Objekt vorhanden ist. Hierbei kann das Zeichen 4 farblich ausgebildet sein und die entsprechende Teilmenge 1_{1..m} ist ebenfalls mit einer entsprechenden Farbe im Hintergrund hinterlegt. Die Zeichen 4 können jedoch anders ausgestaltet sein, beispielsweise als Zahlencode oder mit Hilfe von Symbolen, wobei das Symbol jeweils angibt, in welcher der weiteren Teilmengen 1_{1..m} das jeweilige Objekt vorkommt.

Des Weiteren kann innerhalb oder im Umfeld der Zeichen 4 visualisiert werden, ob hinter dem dargestellten Objekt weitere Hierarchie-Ebenen verborgen sind. Dies kann beispielsweise mit Hilfe eines Plus-Zeichens in einem Kästchen erfolgen. Die Objekte der niedrigsten Hierarchie-Ebene, die sogenannten Blätter des Baumes, bekommen in der hierarchischen grafischen Darstellung einer Teilmenge allenfalls ein Zeichen zugewiesen, wenn sie noch in einer weiteren Teilmenge vorhanden sind. Beispielsweise weisen die Objekte 2_{d}, 2ₑ und 2_{f} in Teilmenge 1₁ ein Zeichen auf, welches darauf hinweist, dass dieselben Objekte auch in der Teilmenge 1₂ enthalten sind.

Ein Benutzer des Systems kann nun innerhalb der Baumstruktur einer ersten Teilmenge 1₁ beliebig navigieren und unterschiedliche Hierarchie-Ebenen aufblättern. Hierbei wird vor den Objekten der einzelnen Hierarchie-Ebene jeweils mittels der Zeichen angezeigt, in welchen weiteren Teilmengen die entsprechenden Objekte enthalten sind und ob hinter ihnen noch weitere Hierarchie-Ebenen angeordnet sind. Möchte ein Benutzer nun die hierarchische Umgebung eines ausgewählten Objektes in einer anderen Teilmenge betrachten, so kann er beispielsweise direkt über die Reiterleiste 5 die andere Teilmenge auswählen und bekommt die entsprechende Umgebung des Objekts dort ebenfalls angezeigt. Gleichzeitig bleibt ein einmal selektiertes Objekt auch weiterhin selektiert und steht somit für die Aktion des Benutzers direkt zur Verfügung. Der Benutzer kann außerdem durch Aktivierung der Übergangsstelle 3, beispielsweise durch Anklicken eines entsprechenden Zeichens 4, in die jeweils andere Hierarchiestruktur, d.h. die andere Teilmenge wechseln.

Ein derartiges System, welches als Multihierarchie-Control bezeichnet wird, ist beispielsweise im Umfeld von ERP-Systemen implementierbar. Am Beispiel der Stückliste für den Automobilbau kann beispielsweise für einen Kaufmann eine aus der Stückliste generierte Hierarchie als weitere Teilmenge realisiert werden. Hierbei sind die Objekte, also die Teile nach Lieferanten strukturiert. Ein Lieferant bietet hierbei eine Menge von Teilen, also Objekten an und ein Objekt kann von mehreren Lieferanten angeboten werden. In einem derartigen Fall ist beispielsweise die Entfernung zum Lieferanten ein relevantes Kriterium, da sich in der Entfernung Kosten verbergen. Für den Einkauf kann beispielsweise ein Baum also so aussehen:

In der obersten Hierarchie-Ebene befinden sich Entfernungsregionen, dann folgen die Lieferanten und in der untersten erst die Teile, die für die Fertigung interessant sind. Hierbei werden aber die von einem Lieferanten gelieferten Teile in unterschiedlichem Zusammenhang im Rahmen der Fertigung des Automobils verwendet und finden sich somit in einer anderen Hierarchie-Struktur, d.h. in einer anderen Teilmenge an einer anderen Stelle wieder. Der Benutzer des Systems kann jedoch leicht zwischen den Hierarchien wechseln und sieht somit immer, in welchem Umfeld, je nach Fragestellung, Einbau oder Kosten, das entsprechende Teil bzw. Objekt eingebettet ist.

Ein Wechsel zwischen den hierarchischen Strukturen, also den Teilmengen ist über die Reiterleiste 5 möglich. Wechselt ein Benutzer von einer Teilmenge 1₁ in eine zweite Teilmenge 1₂ und ist hierbei ein Objekt 2_{b} in einer Teilmenge 1₂ nicht vorhanden, so ist nach dem Wechsel automatisch die Wurzel 6 der neu selektierten Teilmenge 1₂ selektiert. Der Benutzer kann von hieraus also dann auf gewohnte Weise durch die entsprechende Hierarchie navigieren.

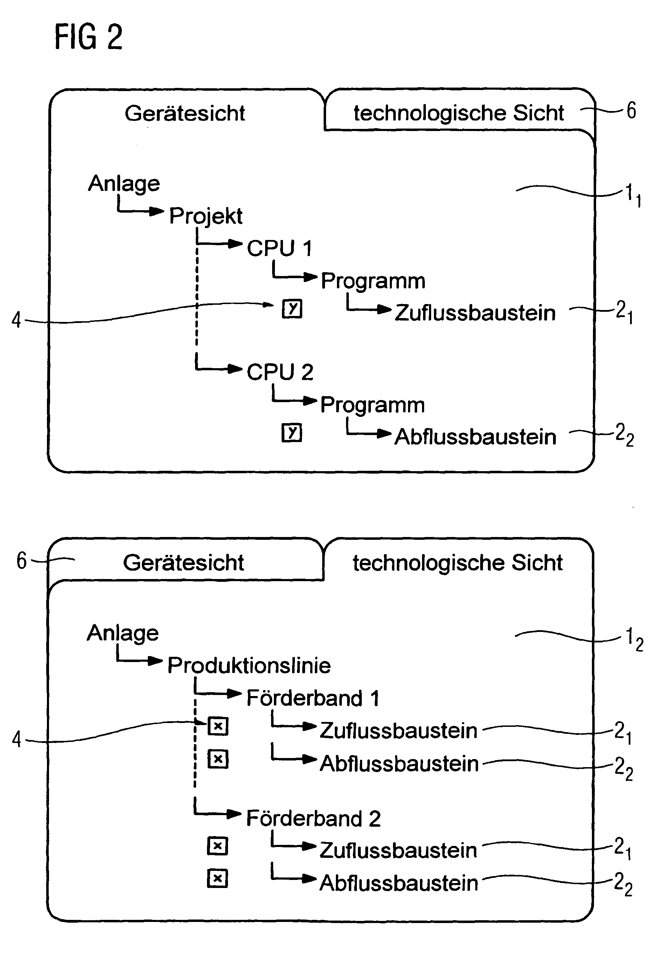

In FIG 2 ist eine spezielle Anwendung im Rahmen der Automatisierungstechnik dargestellt. Für die Projektierung einer Anlage mittels eines Engineering-Systems existieren im dargestellten Ausführungsbeispiel zwei Ansichten:

Einmal die Geräteansicht, welche in Teilmenge 1₁ dargestellt ist und eine technologische Sicht, welche in Teilmenge 1₂ dargestellt ist. Bei der Projektierung der Anlage werden in der Gerätesicht 1₁ Softwarebausteine 2₁, 2₂ (in diesem Fall beispielsweise ein Zuflussbaustein und ein Abflussbaustein für ein Förderband) aus einer Bibliothek mit Softwarebausteinen verwendet. Mehrere derartige Softwarebausteine werden jeweils zu einem Programm zusammengefasst, welches auf einer CPU abläuft. Mehrere Programme werden bei der Projektierung zu einem Projekt zusammengefasst und mehrere Projekte bilden die Anlage. In dem dargestellten Ausführungsbeispiel ist beispielsweise ein Zuflussbaustein 2_{zu} der CPU 1 zugewiesen, läuft also innerhalb eines Programms auf dieser CPU während der Abflussbaustein 2_{ab} einer weiteren CPU, CPU 2 zugewiesen ist.

Im realen Anlagenumfeld sind die beiden Bausteine, der Zuflussbaustein 2_{zu} und der Abflussbaustein 2_{ab} jedoch strukturell näher miteinander verbunden, als es die hierarchische Sicht, welche in der Gerätesicht wiedergegeben ist, erscheinen lässt. Beispielsweise steuert der Zuflussbaustein 2_{zu} das Liefern von Material auf ein Förderband, während der Abflussbaustein 2_{ab} das Entnehmen entsprechenden Materials am Ende des Förderbandes steuert. Die beiden Softwarebausteine flankieren also quasi ein Förderband, welches selbst im Rahmen der Gerätesicht bei der Projektierung der Anlage nicht erscheint. Um einen Überblick über die strukturelle Zusammengehörigkeit der beiden Softwarebausteine 2₁ und 2₂ zu erhalten, kann nun in die technologische Sicht, welche in der Teilmenge 1₂ dargestellt ist, gewechselt werden. Hier sieht ein Benutzer des Systems sofort, dass beispielsweise zwei Förderbänder 1 und 2 projektiert wurden, wobei jedes Förderband über einen Zuflussbaustein 2_{zu} und einen Abflussbaustein 2_{ab} verfügt. Die in der Gerätesicht in getrennten Hierarchien angeordneten Bausteine 2_{zu}, 2_{ab} sind in der technologischen Sicht strukturell also näher beieinander angeordnet. Des Weiteren ist sofort ersichtlich, dass dieselben Bausteine in der technologischen Sicht mehrfach Verwendung finden.

Der Wechsel zwischen den unterschiedlichen Sichten und damit den Teilmengen 1₁ und 1₂ erfolgt durch Aktivierung, beispielsweise Anklicken des Zeichens 4. Hierbei soll im dargestellten Ausführungsbeispiel das Y als Zeichen 4 in der Teilmenge 1₁ visualisieren, dass der entsprechende Softwarebaustein bzw. das Objekt 2_{zu}, 2_{ab} auch in der Teilmenge 1₂ vorkommt, während das X als Zeichen 4 in der technologischen Sicht visualisiert, dass der entsprechende Baustein in der Gerätesicht (Teilmenge 1₁)vorkommt.

Über die Multihierarchie-Controls ist auch eine automatische Zuordnung, beispielsweise der verwendeten Softwarebausteine zu den entsprechenden Geräten (CPUs) bei der Instanziierung der technologischen Sicht möglich.

Eine entsprechende Visualisierung unterschiedlicher hierarchischer Strukturen im Rahmen eines Automatisierungssystems ist nicht nur für das Engineering einer Automatisierungslösung im Rahmen der Fertigungsautomatisierung denkbar, sondern ebenfalls im Umfeld der Prozessautomatisierung. Hierbei kann man sich beispielsweise vorstellen, dass in einer hierarchischen Struktur, also einer Teilmenge ein Kessel mit Zuflüssen, Abflüssen, Ventilen und Prozessmesswerten beispielsweise Druck, Temperatur usw. dargestellt wird. In einer weiteren Sicht kann dagegen der Druck mehrerer Kessel und der Druck in den die Kessel verbindenden Leitungen abgebildet werden.

Zusammenfassend betrifft die Erfindung ein System und ein Verfahren zum einfachen Wechseln zwischen mehreren, jeweils mittels einer hierarchischen Struktur abgebildeten, Mengen 1 von Objekten 2. Hierbei werden die Beziehungen der Objekte 2 zueinander beispielsweise in einer Baumstruktur dargestellt. Zwischen den einzelnen unterschiedlichen Bäumen, die unterschiedliche Beziehungen der Objekte 2 zueinander repräsentieren, kann mittels einer Übergangsstelle 3 gewechselt werden.

## Patentansprüche

1. System zur grafischen Darstellung mehrerer Teilmengen (1_{1..m}) aus einer Gesamtmenge von Objekten (2_{1..n}),
- bei dem die Objekte (2_{1..m}) einer Teilmenge (1ᵢ) zur Darstellung in ihrer jeweiligen hierarchischen Beziehung zueinander vorgesehen sind,
- wobei mindestens ein Objekt (2ₖ) in mindestens zwei Teilmengen (1_{i,j}) vorkommt und als Übergangsstelle (3) zum Wechsel zwischen den Darstellungen der Teilmengen (1_{i,j}) ausgebildet ist,
**dadurch gekennzeichnet,**
**dass** eine Kennzeichnung der Zugehörigkeiten der die Übergangsstellen (3) bildenden Objekte (2ₖ) zu den Teilmengen (1_{i,j}) durch spezifische Zeichen (4) vorgesehen ist, wobei innerhalb oder im Umfeld der Zeichen (4) visualisiert wird, ob in den jeweiligen Teilmengen hinter dem dargestellten Objekt (2ₖ) verborgene Hierarchie-Ebenen vorhanden sind.

2. System nach Anspruch 1,
**dadurch gekennzeichnet,**
**dass** die Darstellung der jeweiligen hierarchischen Beziehung der Objekte (2_{1..n}) zueinander in Form einer Baumstruktur vorgesehen ist.

3. System nach einem der Ansprüche 1 oder 2,
**dadurch gekennzeichnet,**
**dass** das Wechseln zwischen den Darstellungen der Teilmengen (1_{1..m}) durch ein Aktivieren eines als Übergangsstelle (3) ausgebildeten Objekts (2ₖ) durch einen Benutzer des Systems vorgesehen ist.

4. System nach Anspruch 3,
**dadurch gekennzeichnet,**
**dass** ein Wechseln zwischen den Darstellungen der Teilmengen (1_{1..m}) derart erfolgt, dass ein bereits selektiertes Objekt (2ₖ) selektiert bleibt.

5. System nach einem der Ansprüche 1 bis 4,
**dadurch gekennzeichnet,**
**dass** das Wechseln zwischen den Darstellungen der Teilmengen (1_{1..m}) über eine Auswahl eines eine andere Teilmenge darstellenden Baumes durch einen Benutzer mittels einer Reiterleiste (5) vorgesehen ist.

6. System nach Anspruch 5,
**dadurch gekennzeichnet,**
**dass** ein Wechseln zwischen den Darstellungen der Teilmengen (1_{1..m}) derart erfolgt, dass ein bereits selektiertes Objekt (2ₖ) selektiert bleibt, wenn es in der neuen Teilmenge enthalten ist oder dass die nächste auf dem Pfad zur Wurzel (6) liegende Übergangsstelle (3) der neuen Teilmenge selektiert wird, wenn das ursprünglich selektierte Objekt nicht in der neuen Teilmenge vorhanden ist.

7. Verfahren zur grafischen Darstellung mehrerer Teilmengen (1_{1..m}) aus einer Gesamtmenge von Objekten (2_{1..n}) ,
- bei dem die Objekte (2_{1..m}) einer Teilmenge (1ᵢ) in ihrer jeweiligen hierarchischen Beziehung zueinander dargestellt werden,
- wobei mindestens ein Objekt (2ₖ) in mindestens zwei Teilmengen (1_{i,j}) vorkommt und eine Übergangsstelle (3) zum Wechsel zwischen den Darstellungen der Teilmengen (1_{i,j}) bildet,
**dadurch gekennzeichnet,**
**dass** die Zugehörigkeiten der die Übergangsstellen (3) bildenden Objekte (2ₖ) zu den Teilmengen (1_{i,j}) mittels spezifischer Zeichen (4) **gekennzeichnet** werden, wobei innerhalb oder im Umfeld der Zeichen (4) visualisiert wird, ob in den jeweiligen Teilmengen hinter dem dargestellten Objekt (2ₖ) verborgene Hierarchie-Ebenen vorhanden sind.

8. Verfahren nach Anspruch 7,
**dadurch gekennzeichnet,**
**dass** die Darstellung die jeweiligen hierarchischen Beziehung der Objekte (2_{1..n}) zueinander in Form einer Baumstruktur dargestellt werden.

9. Verfahren nach einem der Ansprüche 7 oder 8,
**dadurch gekennzeichnet,**
**dass** zwischen den Darstellungen der Teilmengen (1_{1..m}) mittels Aktivieren eines als Übergangsstelle (3) ausgebildeten Objekts (2ₖ) durch einen Benutzer des Systems gewechselt wird.

10. Verfahren nach Anspruch 9,
**dadurch gekennzeichnet,**
**dass** beim Wechseln zwischen den Darstellungen der Teilmengen (1_{1..m}) ein bereits selektiertes Objekt (2ₖ) selektiert bleibt.

11. Verfahren nach einem der Ansprüche 7 bis 10,
**dadurch gekennzeichnet,**
**dass** zwischen den Darstellungen der Teilmengen (1_{1..m}) über eine Auswahl eines eine andere Teilmenge darstellenden Baumes aus einer Reiterleiste (5) durch einen Benutzer gewechselt wird.

12. Verfahren nach Anspruch 11,
**dadurch gekennzeichnet,**
**dass** beim Wechseln zwischen den Darstellungen der Teilmengen (1_{1..m}) ein bereits selektiertes Objekt (2ₖ) selektiert bleibt, wenn es in der neuen Teilmenge enthalten ist oder dass die nächste auf dem Pfad zur Wurzel (6) liegende Übergangsstelle (4) der neuen Teilmenge selektiert wird, wenn das ursprünglich selektierte Objekt nicht in der neuen Teilmenge vorhanden ist.

## Claims

1. System for graphical presentation of a number of subsets (1_{1..m}) from an overall set of objects (2_{1..n}),
- in which the objects (2_{1..m}) of a subset (1_{I}) are provided for presentation of their hierarchical relationship to each other,
- with at least one object (2ₖ) occurring in at least two subsets (1_{I,j}) and being embodied as the transition point (3) between the presentations of the subset (1_{I,j}),
**characterized in that**
- specific signs (4) are provided to identify the membership of the objects (2ₖ) forming the transition points (3) in the subsets (1_{I,j}), with there being visualization within the sign (4) or in its environment as to whether there are hidden hierarchy levels in the relevant subsets behind the object(2ₖ) presented.

2. System in accordance with claim 1,
**characterized in that**
- the presentation of the relevant hierarchical relationship of the objects (2_{1..n}) to each other is provided in the form of a tree structure.

3. System in accordance with one of the claims 1 to 3,
**characterized in that**
there is provision for the user of the system to switch between the presentations of the subsets (1_{1..m}) by activating an object (2ₖ) embodied as a transition point (3).

4. System in accordance with claim 3,
**characterized in that**
a switch between the presentations of the subsets (1_{1..m}) is made such that the already selected object (2ₖ) remains selected.

5. System in accordance with one of the claims 1 to 4,
**characterized in that**
there is provision for the switch between the presentations of the subsets (1_{1..m}) to be made by the user using a tab bar (5) to select a tree representing another subset.

6. System in accordance with claim 5,
**characterized in that**
a switch between the presentations of the subset (1_{1..m}) is made in such as way that an already selected object (2ₖ) remains selected if it is contained in the new subset or that the next transition point (3) of the new subset lying on the path to the root (6) is selected if the original selected object is not present in the new subset.

7. Method for graphical presentation of a number of subsets (1_{1..m}) from an overall set of objects (2_{1..n}),
- in which the objects (2_{1..m}) of a subset (1_{I}) are presented in their relevant hierarchical relationship to each other,
- with at least one object (2ₖ) occurring in at least two subsets (1_{I,j}) and forming a transition point (3) between the presentations of the subsets (1_{I,j}),
**characterized in that**
specific signs (4) are provided to identify the membership of the objects (2ₖ) forming the transition points (3) in the subsets (1_{I,j}), with there being visualization within the sign (4) or in its environment as to whether there are hidden hierarchy levels in the relevant subsets behind the object(2ₖ) presented.

8. Method according to claim 7,
**characterized in that**
the presentation of the relevant hierarchical interrelationship of the objects (2_{1..n}) is presented in the form of a tree structure.

9. Method in accordance with one of the claims 7 or 8,
**characterized in that**
a user of the system switches between the presentations of the subsets ( 1_{1..m}) by activating an object (2ₖ) embodied as a transition point (3).

10. Method in accordance with to claim 9,
**characterized in that**
an already selected object (2ₖ) remains selected when the switch is made between the presentations of the subsets (1_{1..m}).

11. Method in accordance with one of the claims 7 to 10,
**characterized in that**
a user switches between the presentations of the subsets (1_{1..m}) by selecting a tree representing another subset by means of a tab bar (5)

12. Method in accordance with claim 11,
**characterized in that**
when the switch is made between the presentations of the subsets (1_{1..m}) an object already selected (2ₖ) remains selected if it is contained in the new subset or that the next transition point (3) of the new subset lying on the path to the root (6) is selected if the originally selected object is not present in the new subset.

## Revendications

1. Système de représentation graphique de plusieurs sous-ensembles (1_{1...m}) d'un ensemble total d'objets (2_{1...n}),
- dans lequel les objets (2_{1...m}) d'un sous-ensemble (1ᵢ) sont prévus pour la représentation dans leur relation hiérarchique respective les uns par rapport aux autres,
- au moins un objet (2ₖ) existant dans au moins deux sous-ensembles (1_{i,j}) et étant conçu comme point de transition (3) pour le changement entre les représentations des sous-ensembles (1_{i,j}),
**caractérisé par le fait qu'**il est prévu une identification des appartenances des objets (2ₖ), formant les points de transition (3), aux sous-ensembles (1_{i,j}) au moyen de signes spécifiques (4), sachant qu'on visualise à l'intérieur ou dans la zone des signes (4) s'il existe des niveaux hiérarchiques cachés derrière l'objet représenté (2ₖ) dans les sous-ensembles respectifs.

2. Système selon la revendication 1,
**caractérisé par le fait que** la représentation de la relation hiérarchique respective des objets (2_{1...n}) les uns par rapport aux autres est prévue sous la forme d'une structure arborescente.

3. Système selon l'une des revendications 1 ou 2,
**caractérisé par le fait que** le changement entre les représentations des sous-ensembles (1_{1...m}) est prévu au moyen d'une activation d'un objet (2ₖ) conçu comme point de transition (3), cette activation étant effectuée par un utilisateur du système.

4. Système selon la revendication 3,
**caractérisé par le fait qu'**un changement entre les représentations des sous-ensembles (1_{1...m}) s'effectue de telle sorte qu'un objet déjà sélectionné (2ₖ) reste sélectionné.

5. Système selon l'une des revendications 1 à 4,
**caractérisé par le fait que** le changement entre les représentations des sous-ensembles (1_{1...m}) est prévu par l'intermédiaire d'une sélection d'une arborescence représentant un autre sous-ensemble, cette sélection étant effectuée par un utilisateur au moyen d'une barre d'onglets (5).

6. Système selon la revendication 5,
**caractérisé par le fait qu'**un changement entre les représentations des sous-ensembles (1_{1...m}) s'effectue de telle sorte qu'un objet déjà sélectionné (2ₖ) reste sélectionné s'il est contenu dans le nouveau sous-ensemble ou que le plus proche point de transition (3), situé sur le chemin vers la racine (6), du nouveau sous-ensemble est sélectionné si l'objet initialement sélectionné n'est pas dans le nouveau sous-ensemble.

7. Procédé de représentation graphique de plusieurs sous-ensembles (1_{1...m}) d'un ensemble total d'objets (2_{1...n}),
- dans lequel on représente les objets (2_{1...m}) d'un sous-ensemble (1ᵢ) dans leur relation hiérarchique respective les uns par rapport aux autres,
- au moins un objet (2ₖ) existant dans au moins deux sous-ensembles (1_{i,j}) et formant un point de transition (3) pour le changement entre les représentations des sous-ensembles (1_{i,j}),
**caractérisé par le fait que** l'on identifie les appartenances des objets (2ₖ), formant les points de transition (3), aux sous-ensembles (1_{i,j}) au moyen de signes spécifiques (4), sachant qu'on visualise à l'intérieur ou dans la zone des signes (4) s'il existe des niveaux hiérarchiques cachés derrière l'objet représenté (2ₖ) dans les sous-ensembles respectifs.

8. Procédé selon la revendication 7,
**caractérisé par le fait que** l'on représente la relation hiérarchique respective des objets (2_{1...n}) les uns par rapport aux autres sous la forme d'une structure arborescente.

9. Procédé selon l'une des revendications 7 ou 8,
**caractérisé par le fait que** l'on change entre les représentations des sous-ensembles (1_{1...m}) au moyen d'une activation d'un objet (2ₖ) conçu comme point de transition (3), cette activation étant effectuée par un utilisateur du système.

10. Procédé selon la revendication 9,
**caractérisé par le fait que**, lors du changement entre les représentations des sous-ensembles (1_{1...m}), un objet déjà sélectionné (2ₖ) reste sélectionné.

11. Procédé selon l'une des revendications 7 à 10,
**caractérisé par le fait que** l'on change entre les représentations des sous-ensembles (1_{1...m}) par l'intermédiaire d'une sélection d'une arborescence représentant un autre sous-ensemble, cette sélection étant effectuée dans une barre d'onglets (5) par un utilisateur.

12. Procédé selon la revendication 11,
**caractérisé par le fait que**, lors du changement entre les représentations des sous-ensembles (1_{1...m}), un objet déjà sélectionné (2ₖ) reste sélectionné s'il est contenu dans le nouveau sous-ensemble ou on sélectionne le plus proche point de transition (4), situé sur le chemin vers la racine (6), du nouveau sous-ensemble si l'objet initialement sélectionné n'est pas dans le nouveau sous-ensemble.
